# EUROPEAN PATENT APPLICATION

(11) **EP 1 079 660 A1**
(43) Date of publication of application: **28.02.2001**
(21) Application number: 99402093.1
(22) Date of filing: 20.08.1999
(51) Int. Cl.: H04Q 11/04, H04L 12/56

(54) **Buffer acceptance method**

(71) Applicant: ALCATEL, 75008 Paris (FR)
(72) Inventor: Nelisse, Jordi, 3090 Overijse (BE)
(74) Representative: Narmon, Gisèle Marie Thérèse

(57) **Abstract**

The invention relates to a buffer acceptance method. Such a buffer acceptance method is used for deciding whether to accept incoming data (P-VCi) of a data flow in a buffer (BUF). The buffer (BUF) is dynamically shared by data of a plurality of data flows. The incoming data (P-VCi) comprises a priority (P2) out of at least two priorities (P1, P2). The method comprises the steps of associating for each data flows and to each priority at least one predetermined partial buffer threshold (PBTi2) and at least one predetermined global buffer threshold (GBTmin, GBTmax). Upon reception of the incoming data (P-VCi), its related data flow (VCi) and its priority (P2) is determined. Furthermore, a first monitoring of an actual occupation level of a partial buffer part (qi), being associated to the data flow, against the associated predetermined partial buffer threshold (PBTi2) is executed and a second monitoring of a global occupation level of the buffer (Q) against the predetermined global buffer threshold (GBTmin, GBTmax) being associated to the data flow (VCi) and to the priority (P2) is executed. Finally, the method comprises denying acceptance of the incoming data (P-VCi) in the event when both monitoring tests are providing a drop result i.e. the first monitoring provides a first drop result and the second monitoring provides also a second drop result.

## Description

The present invention relates to a buffer acceptance method used for deciding whether to accept incoming data of one of a plurality of data flows in a buffer according to the preamble of claim 1, a buffer control means realizing such a method according to the preamble of claim 6 and a telecommunication network including such a buffer control means according to the preamble of claim 7.

Such a method and buffer control means are already known in the art, e.g. from *"the European patent from IBM with title "Access control system for a shared buffer" and publication date 1996-12-11 and reference number EPO748087".*

As mentioned in the first paragraph of this patent, such an access control system is used for a shared buffer or memory. The access control system is used for controlling a buffer for storing data with different priorities. The buffer has a shared part and a plurality of dedicated parts. Such a buffer and access control system might be used in a telecommunication switch for handling data traffic between a plurality of input and output ports. An example of such a telecommunication switch is a switch in an asynchronous transfer mode ATM system wherein the transported data flows comprises data packets called ATM cells. Such ATM cells include a priority bit called cell loss priority bit, CLP bit, that indicates according to the value of the bit the priority of the cell.

According to the above mentioned patent, an access control system for a common or global storage supporting virtual output queues dedicated to each of the output lines of the storage is described for data of different priorities. The access control system comprises thresholds for each priority class with respect to the global occupation level of the storage and to the occupation level of each virtual queue. The access control system enables a contention control.

Indeed, such a buffer acceptance method therefor comprises different steps. A first step is associating for each one of the plurality of data flows and to each one of the priorities at least one predetermined partial buffer threshold and at least one predetermined global buffer threshold. It has to be remarked that, as it is mentioned in the EP0748087 patent, the thresholds associated with each priority of the different traffics i.e. data flows can take different values for different data flows. A second step is determining for the incoming data the related data flow and the priority of the data packet. Hereafter a first monitoring is executed. Indeed, an occupation level of a partial buffer part that is associated to the related data flow is triggered against the predetermined partial buffer threshold that is associated for the related data flow to the particular priority. Furthermore, a second monitoring of a global occupation level of the buffer against the predetermined global buffer threshold that is associated for the related data flow to the determined priority is executed.

Such a buffer acceptance method offers different conditions under which the incoming data can be rejected. Indeed, by monitoring not only the main or global buffer occupation but in addition each dedicated part, the contention or competition for the global buffer among the different data flows can be controlled. A refinement is explained in a preferred embodiment of the IBM patent where for the decision of whether to reject the received data is based on the overall occupation level of the buffer or on the occupation level of the part of the buffer that is dedicated to the respective data flow. In that embodiment, the received data is rejected when the threshold associated with the priority class of the data is reached or exceeded either in the buffer or in its respective dedicated part. To this end, the output of the threshold monitor for the dedicated part and for the overall buffer are subject to a Boolean OR operation.

It has to be explained that denying access to incoming data if a threshold, the one or the other, is reached gives an unfair treatment of a data flow with a lower priority class to a data flow with a higher priority class. Indeed, in the event when a few data flows with a high priority indication are consuming a large global buffer share by being systematically accepted, the global buffer threshold will be reached whereby all incoming data will be denied. In such an event, also incoming data of a data flow with a lower priority indication will be denied, irrespective of the fact whether this data flow is using a too large share of the global buffer or not.

An object of the present invention is to provide a buffer acceptance method such as the above known method but which provides a relative priority interpretation whereby a data flow with a lower priority class receives a fair treatment to a data flow with a higher priority class.

According to the invention, this object is achieved due to the fact that the method according to the present application further comprises denying acceptance of the incoming data only in the event when the first monitoring provides a drop result and the second monitoring provides also a drop result. This means that both monitoring steps must provide a drop result before acceptance of the particular incoming data will be denied. This buffer acceptance method with a relative priority indication interpretation comprises at least one condition for acceptance of data of a data flow that is independent of the other data flows. Indeed, data of a data flow with a lower priority indication is accepted as long as e.g. the occupation level of the partial buffer part that is associated to the data flow is lower than the predetermined partial buffer threshold that is associated for that data flow to this lower priority indication. This condition is independent of the global occupation level of the buffer, since as long that the partial buffer part is not too much, only the second monitoring might provide a drop result.

This is described by the buffer acceptance method of claim 1 that is realized by the buffer control means of claim 6 which is included in the telecommunication network of claim 7.

It has to be remarked that the priority, as mentioned in the present application, can be indicated by e.g. the cell loss priority bit CLP in an asynchronous transfer mode ATM cell in an ATM network, or by the type of service bit TOS of an internet protocol packet in an internet protocol network. Indeed, as it is described in the above mentioned patent of IBM, a classification tag i.e. priority can be attached to the pure information or payload in order to trigger the desired way of handling the information classified in this manner. As an example, video and audio applications might be classified as having a higher priority, and file transfers and e-mail as having a lower priority. A further example of the use of the present application is the Motion Picture Expert Group MPEG4 coding. Herewith different priority indications e.g. up to seven, are provided to the different parts of a picture of e.g. a video transfer.

A further remark is that for a certain priority of different data flows, different values might be predefined for as well the partial buffer threshold as for the global buffer threshold.

A possible implementation is described in claim 2. Herein, the predetermined global buffer threshold has an identical value for each one of the plurality of data flows. This provides the advantage of less information to be stored by the control means and faster working of the second monitoring mean.

A further feature is described by claim 3. Herein, it is described that the first monitoring, executed by the first monitoring means, provides a drop result in the event when the occupation level of the partial buffer part is above the associated predetermined partial buffer threshold.

Furthermore, it is described in claim 4 that the step of providing a second monitoring which is executed by the second monitoring means comprises the steps of determining a global occupation level by a current average global buffer occupancy and by determining the predetermined global buffer threshold for each data flow and for each priority by a minimum global buffer threshold and a maximum global buffer threshold. Furthermore, the second drop result is always provided in the event when the average global buffer occupancy is above the maximum global buffer threshold and is provided with a predefined dropping probability in the event when the average global buffer occupancy is between the minimum global buffer threshold and the maximum global buffer threshold.

Finally it is described in claim 5 that the above mentioned predefined dropping probability is realized by an increasing function of the current average global buffer occupancy between the minimum global buffer threshold and the maximum global buffer threshold. In this way a mechanism called Random Early Detection mechanism is used in order to provide the second drop result. This Random Early Detection mechanism is a known mechanism which drops incoming packets with a dynamically computed probability when the average number of packets queued exceeds a threshold i.e. the minimum global buffer threshold. This probability increases with the average global buffer occupancy and controls the global buffer occupancy more effectively.

It has to be explained that a simple partial buffer sharing per data flow would generate a too severe drop behavior on the different data flows. Indeed, each instantaneous surpass of the predefined thresholds would cause the loss of data which results in bursts of dropped data and consequently low throughput of the data flow. Moreover the simple use of a per data flow thresholds compartments the buffer completely without any statistical multiplexing of the available global buffer space among the different connections. According to the present application and the above mentioned implementation a random early detection mechanism in parallel with a per data flow buffer sharing is introduce. Moreover, incoming data of a data flow is only dropped in the event when this data flow is considered to be over-shared i.e. a first drop result whereby the decision on whether the incoming data should be accepted or discarded is handled by the random early detection mechanism i.e. a second drop result. By basing the drop decision on Random Early Detection, incoming data is dropped randomly instead of being dropped in bursts. This is due to the fact that the random early mechanism maintains the average buffer occupancy between the minimum global buffer threshold and the maximum global buffer threshold.

It should be noticed that the term 'comprising', used in the claims should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noted that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and in input of B which may be a path including other devices or means.

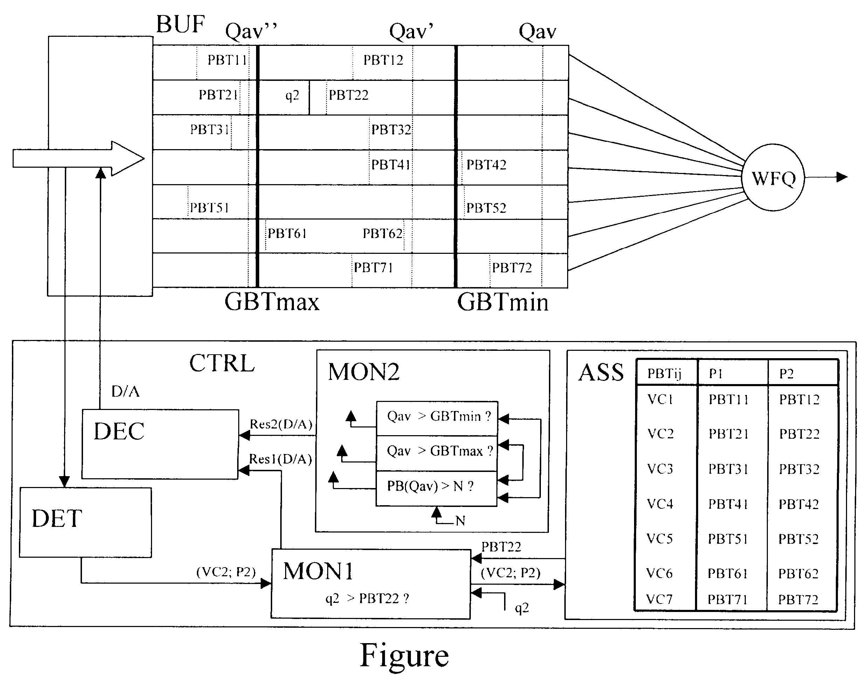

The above and other objects and features of the invention will become more apparent and the invention itself will be best understood by referring to the following description of an embodiment taken in conjunction the accompanying Figure which illustrates a buffer and a buffer controller.

First, the working of the controller of the present invention will be explained by means of a functional description of the functional blocks shown in the Figure. Based on this description, implementation of the functional blocks will be obvious to a person skilled in the art and will therefor not be described in further detail. In addition, the principle working of the buffer acceptance method will be described.

Referring to the Figure a buffer and a buffer controller is shown. A possible use of the present invention is in a ATM network and more particular in an ATM switch. Incoming data is accomplished by ATM data packets i.e. and ATM cell which comprises an ATM header and an ATM payload. A value of a cell loss priority CLP bit in the header of an ATM packet indicates the kind of priority of the ATM packet. In this way indicates CLP=0 a highest priority which is referred to in this following description by P1 and CLP=1 a lowest priority which is referred to in this following description by P2. This means that, for this particular embodiment of the present invention, only two priorities are defined for each data flow.

Furthermore is in the header of an ATM packet the data flow to which it belongs to indicated by a virtual channel reference. In order not to overload the present description are only seven data flows shown in the Figure which are referred to with VC1, VC2, VC3, VC4, VC5, VC6, VC7.

The present ATM switch implementation supports the Guaranteed Frame Rate Service Category GFR and maintains one logical queue for each established virtual channel VC1, VC2, ..., VC7. This means that the ATM switch must be able, in order to support e.g. the GFR.1 conformance definition, to determine by itself which CLP=0 AAL5 packet data units PDU's must be transmitted to fulfill the minimum guaranteed bandwidth and which AAL5-PDUs are part of the excess traffic and thus could be discarded if congestion occurs.

The present implementation relies on a weighted fair queuing scheduler WFQ in order to provide the minimum guaranteed bandwidth for each virtual channel i.e. the scheduler WFQ is configured to serve the queue corresponding to each virtual channel at least at its associated minimum cell rate. The utilization of this scheduler guarantees that, when active, each virtual channel will be allocated its reserved bandwidth as ell as some fair share of the available excess bandwidth. In addition to the per virtual channel scheduler, the ATM switch also relies on the buffer acceptance method of the present invention. The method requires the presence of a buffer BUF to store the incoming ATM cells and a buffer controller CTRL, coupled thereto. By using the virtual channel information in the ATM cells and a proper management of the buffer memory addresses i.e. pointers, the buffer memory is organized such as to comprise a number of virtual or logical first in first out FIFO queues. Each FIFO queue is exclusively assigned to one of the virtual channels i.e. data flows VC1, VC2, ..., VC7. All free buffer memory BUF space can be in principle used by any incoming ATM cell, thus elongating the queue dedicated to its data flow. The controller CTRL manages and distributes the available memory addresses to this end. Since this mechanism goes beyond the aim of the invention, the related functional blocks to execute this proper memory allocation, are not shown.

It is however to be noted that the buffer controller CTRL keeps track of all address pointers of the buffer BUF memory and can therefor easily be exploited to monitor thresholds in both the global buffer i.e. global occupation level Q and to each dedicated partial buffer part i.e. occupation level of a partial buffer part q1, q2, q3, q4, q5, q6 and q7. In order not to overload the figure, only the occupation level q2 of the partial buffer part VC2 is shown.

Furthermore, it has to be explained that the buffer controller CTRL comprises pointer queues (not shown) for storing address pointers to buffer memory locations BUF of the global buffer. In fact they establish the dedicated data queues within the global memory. Thus, even though the data belonging to one data flow are shown in the Figure in one queue, in most cases they are stored at random locations within the buffer memory BUF.

Furthermore to the above known functions, the buffer controller CTRL comprises, a determiner DET, a first monitor MON1, a second monitor MON2, and associater ASS and a decider DEC.

The determiner DET is coupled to an input of the buffer memory BUF. The first monitor MON1 is coupled to the determiner DET and to the associater ASS. The decider DEC is coupled to the first monitor MON1, the second monitor MON2 and the input of the buffer memory BUF.

First the associater ASS will be explained. As it is mentioned above the controller CTRL can easily be exploited to monitor thresholds. These thresholds are predefined and stored in the associater ASS. According to the present invention for each data flow and to each priority at least one partial buffer threshold and at least one global buffer threshold is predefined. For this particular embodiment it is preferred to associate for each data flow and to each priority one partial buffer threshold i.e. PBTij. The reference 'i' indicates the associated data flow and the reference 'j' indicates the associated priority. As it is shown in the Figure (see buffer memory part BUF) some of the partial buffer thresholds PBTij have identical values and others are different from each other. Each virtual channel has two partial buffer thresholds i.e. one associated to priority P1 and one associated to priority P2. These partial buffer thresholds are kept in a simple memory table. Upon reception of a virtual channel identifier and a priority class, the associater ASS determines the associated partial buffer threshold PBT accordingly and provides this to its output. In this way the associated partial buffer threshold PBT for the virtual channel VC2 and to the priority P2 is determined as PBT22.

Furthermore it is decided to define for all virtual channels and for all priorities only two global buffer thresholds i.e. the minimum global buffer threshold GBTmin and the maximum global buffer threshold GBTmax. Since these thresholds are identical for all data flows and for all priorities they must not be kept or determined by associater ASS.

The determiner DET is included to extract the information of the header of an incoming ATM cell and to determine hereby the data flow whereto the ATM cells belongs and the priority class it belongs to.

The first monitor MON is included to use the determined information of the determiner DET i.e. associated data flow and priority and to request based upon this information to the associater ASS the associated partial buffer threshold PBTij. Hereafter the first monitor MON1 monitors this partial buffer threshold PBTij against the actual occupation level of the partial buffer part associated to the related data flow. The monitoring function is implemented by providing a first drop result Res1(D) in the event when the occupation level of the partial buffer part qi is above the predetermined partial buffer threshold PBTij. This means that the data flow is actual considered to be overshared. In the other case, the first monitor MON1 provides a first accept result Res1(A) (not shown). It has to be explained that this first monitor MON1 includes, in order to execute this monitoring, a comparator. Since implementation of this comparator and related functional blocks are obvious to a person skilled in the art they are not further explained in detail.

The second monitor MON2 is included to monitor the global occupation level Q against the minimum global buffer threshold GBTmin and the maximum global buffer threshold GBTmax. The preferred implementation for this monitoring is a random early detection mechanism. This means that the global occupation level is determined by the current average global buffer occupancy Qav which is compared with the predefined minimum global buffer threshold GBTmin and with the predefined maximum global buffer threshold GBTmax. When the minimum global buffer threshold GBTmin is exceeded by the actual average global buffer occupancy a dropping probability is determined. This dropping probability Pb(Qav) is an increasing function of the average global buffer occupancy Qav. Since random early meachanism are known to a person skilled in the art and since the outlook of the function to determine the dropping probability goes beyond the scope of the invention, this functions is nor further described in details. The aim is that the calculated dropping probability is compared with a random number N between zero and one which is generated by a random generator (not shown). When the value of this number N is bigger than the dropping probability Pb(Qav) the second monitor generates a second result which is an accept result Res2(A) (not shown). But, when the value of this number N is smaller than the dropping probability Pb(Qav) the second monitor MON2 generates a second drop result Res2(D). Furthermore, when the maximum global buffer threshold GBTmax is exceeded by the actual average global buffer occupancy the second monitor MON2 provides always a second drop result.

The decision means DEC is included to deny acceptance of the ATM cell when the first monitor MON1 provides a drop result Res1(D) and the second monitor MON2 provides also a drop result Res2(D).

It has to be explained that in order to simplify the implementation the average global buffer occupancy might be continuously monitored against the minimum global buffer threshold and the maximum global buffer threshold whereby the random early detection dropping probability is only calculated in the event when the minimum global buffer threshold is passed and when the second monitor MON2 receives a trigger of the first monitor MON1 i.e. when the partial buffer threshold PBTij is passed by the occupation level of the partial buffer part. In this way the calculation of the dropping probability and the comparison with the random number N is only executed when the related data flow is overshared and whereby also the average global buffer occupancy exceeded the minimum global buffer threshold GBTmin.

Furthermore it is important to explain that although the buffer acceptance method is here described in a packet discarding mode, the present invention might as well be used in a packet marking mode. Indeed, in its packet discarding mode, the buffer acceptance method acts as a buffer acceptance mechanism, prohibiting packets to access e.g. a switch buffer in case of congestion. In its marking mode, it can be used to signal impending congestion by means of Explicit Congestion Notification marking. This means that, in the event when a drop result is provided by the buffer acceptance method i.e. a first drop result Res1(D) and a second drop result Res2(D) is provided, the incoming data is not necessarily really dropped but might be as well only be marked according to predefined rules and conditions. This will become more clear with the following example of an implementation of the present invention in e.g. an Internet Protocol network. Such an IP switch can interpret a marking bit of an incoming IP packet. In combination with the result of a comparison of the actual average occupation level of the global buffer compared with a predefined plenty global buffer threshold which indicates that the global buffer reached an ultimate level, the IP packet will be really dropped or will be marked, upon reception of a denying signal of the decision means DEC.

The following paragraph describes the principle working of the buffer acceptance method according to the present invention by means of an example of incoming data i.e. an incoming ATM cell. Presume that the header of the ATM cell comprises a CLP bit = 1 i.e. the second priority P2 and a virtual channel identifier that identifies the data flow VC2. This information is extracted by the determiner DET and is provided to the first monitor MON1. The first monitor MON1 request the associated partial buffer threshold PBTij out of the associater ASS according to data flow identifier and the priority i.e. VC2 and P2, respectively. The associator ASS provides the requested partial buffer threshold i.e. PBT22. This partial buffer threshold PBT22 is compared with the occupation level q2 of the partial buffer part of the data flow VC2. Firstly presume a situation that the occupation level q2 of the partial buffer part exceeded the partial buffer threshold PBT22. This is shown in the Figure. The first monitor MON1 provides a first deny result Res1(D).

In the mean time, the average global buffer occupancy Qav is being compared to the minimum global buffer threshold GBTmin and eventual to the maximum global buffer threshold GBTmax.

Presume a situation that this average global buffer occupancy is still lower than the minimum global buffer threshold GBTmin. This is shown by the dashed line referred to with Qav. The second monitor MON2 provides an acceptance result Res2(A) and the decider DEC on its turn, after having received only a first deny result, provides an acceptance singal A. In such a situation, although that the data flow VC2 already used a big share of its entitled partial buffer part, since the global buffer is not overloaded at all, the ATM cell is accepted.

Presume now that the average global buffer occupancy is between the minimum global buffer threshold GBTmin and the maximum global buffer threshold GBTmax. This is shown by the dashed line referred to by Qav'. According to the present implementation a dropping probability is calculated in function of the average global buffer occupancy Qav'. Presume a situation that the calculated dropping probability is equal to PB(Qav) = 0.27. This result is compared with a random number N. Presume that the random number is bigger than the dropping probability e.g. 0.355 > 0.27. Herewith the second monitor MON2 provides an acceptance result Res2(A) which means that the ATM cell will still be accepted. On the other hand, when the generated random number N is smaller than the dropping probability e.g. 0.123 < 0.27 the second monitor MON2 provides a second drop result Res2(D) whereby the decider DEC receives two drop results Res1(D) and Res2(D). This results in a drop signal D from the decider DEC to the input of the buffer memory BUF.

In the event when the average global buffer occupancy, referred with Qav", exceeds the maximum global buffer threshold GBTmax the second monitor MON2 provides immediately a second drop result Res2(D) whereby the ATM cell is denied. This means that the data flow VC2 is overshared but also that the global buffer reached its limits whereby the global buffer can not accepts an ATM cell of such an overshared data flow anymore.

Presume now, secondly, that the occupation level of the partial buffer part q2 did not exceeded yet the partial buffer threshold PBT22 (not shown). In this case and according to the value of the average global buffer threshold Qav" of this previous paragraph, the ATM cell is still accepted. Indeed, although that the global buffer reached its limits, the buffer can still afford to accept an ATM cell of a data flow that is not at all overshared.

In this way a relative priority interpretation is provided. Indeed the buffer acceptance method according to the present invention provides a condition where under a data packet is accepted and which is independent of the respectively shares of all the other data flows.

It has to be remarked that although the above description of a particular embodiment is a description of a buffer in an ATM network, the scope of the invention is not limited to an ATM network. Indeed, small modifications, evident to a person skilled in the art might be applied to the above description of an embodiment in order to use it in an other communication network wherein the incoming data of the different data flows have different priorities e.g. an Internet protocol network with a type of service bit to indicate a priority class of the different IP packets of the different data flows.

While the principles of the invention have been described above in connection with specific apparatus, it is to be clearly understood that this description is made only by way of example and not as a limitation on the scope of the invention, as defined in the appended claims.

## Claims

1. A buffer acceptance method used for deciding whether to accept incoming data (P-VCi) of one (VCi) of a plurality of data flows in a buffer (BUF) being dynamically shared by data of said plurality of data flows, said incoming data (P-VCi) having a priority (P2) out of at least two priorities (P1, P2), said buffer acceptance method therefor comprises the steps of associating for each one (VCi) of said plurality of data flows and to each one (P2) of said at least two priorities (P1, P2) at least one predetermined partial buffer threshold (PBTi2) and at least one predetermined global buffer threshold (GBTmin, GBTmax), and determining for said incoming data (P-VCi) said one data flow (VCi) and said priority (P2), and providing a first monitoring of an occupation level of a partial buffer part (qi) being associated to said one (VCi) data flow against said at least one predetermined partial buffer threshold (PBTi2) being associated for said one data flow (VCi) to said priority (P2), and providing a second monitoring of a global occupation level of said buffer (Q) against said at least one predetermined global buffer threshold (GBTmin, GBTmax) being associated for said one data flow (VCi) to said priority (P2), **characterized** in that said method further comprises denying acceptance of said incoming data (P-VCi) in the event when said first monitoring provides a first drop result and said second monitoring provides a second drop result.

2. The buffer acceptance method according to claim 1, characterized in that said at least one predetermined global buffer threshold (GBTmin, GBTmax) has an identical value for each one of said plurality of data flows.

3. The buffer acceptance method according to any previous claim, characterized in that said first monitoring provides a first drop result in the event when said occupation level of said partial buffer part (qi) is above said at least one predetermined partial buffer threshold (PBTi2).

4. The buffer acceptance method according to any previous claim, characterized in that said step of providing a second monitoring comprises the steps of determining said global occupation level (Q) by a current average global buffer occupancy (Qav) and determining said at least one predetermined global buffer threshold (GBTmin, GBTmax) by a minimum global buffer threshold (GBTmin) and a maximum global buffer threshold (GBTmax) and providing said second drop result in the event when said global occupation level (Qav) is between said minimum global buffer threshold (GBTmin) and said maximum global buffer threshold (GBTmax) with a predefined dropping probability (PB(Qav)) and in the event when said global occupation level (Qav) is above said maximum global buffer threshold (GBTmax).

5. The buffer acceptance method according to claim 4, characterized that said predefined dropping probability (PB(Qav) is an increasing function of said current average global buffer occupancy (Qav) between said minimum global buffer threshold (GBTmin) and said maximum global buffer threshold (GBTmax).

6. Buffer control means (CTRL) to decide whether to accept incoming data (P-VCi) of one (VCi) of a plurality of data flows in a buffer (BUF) being coupled thereto and being dynamically shared by data of said plurality of data flows, said incoming data (P-VCi) having a priority (P2) being one of at least two priorities (P1, P2), said buffer control means (CTRL) comprises associating means (ASS) to associate for each one of said plurality of data flows and to each one of said at least two priorities (P1, P2) at least one predetermined partial buffer threshold (PBTi2) and at least one predetermined global buffer threshold (GBTmin, GBTmax), and determining means (DET) to determine for said incoming data (P-VCi) said one data flow (VCi) and said priority (P2), and first monitoring means (MON1) to monitor an occupation level of a partial buffer part (qi) of said buffer being associated to said one (VCi) data flow against said at least one predetermined partial buffer threshold (PBTi2) associated for said one data flow (VCi) to said priority (P2) and second monitoring means (MON2) to monitor a global occupation level (Q) of said buffer against said at least one predetermined global buffer threshold (GBTmin, GBTmax) associated for said one data flow (VCi) to said priority (P2), **characterized** in that said buffer control means (CTRL) further comprises decision means (DEC) coupled to said first monitoring means (MON1) and to said second monitoring means to deny acceptance of said data packet (P-VCi) when said first monitoring means (MON1) provides a first drop result and said second monitoring means (MON2) provides a second drop result.

7. A telecommunication network characterized in that said telecommunication network comprises at least a buffer control means (CTRL) according to claim 6.
